Europäisches Patentamt

European Patent Office

Office européen des brevets

(19)

(11) Numéro de publication: **0 070 759**
**B1**

(12)

# FASCICULE DE BREVET EUROPEEN

(45) Date de publication du fascicule du brevet:
**06.02.85**

(51) Int. Cl.⁴: **A 46 D 3/04** // D04H3/07

(21) Numéro de dépôt: **82401269.4**

(22) Date de dépôt: **06.07.82**

(54) Procédé d'implantation de picots sur un mandrin et machine pour la mise en oeuvre de ce procédé.

(30) Priorité: **16.07.81 FR 8113868**

(43) Date de publication de la demande:
**26.01.83 Bulletin 83/4**

(45) Mention de la délivrance du brevet:
**06.02.85 Bulletin 85/6**

(84) Etats contractants désignés:
**BE CH DE GB IT LI NL SE**

(56) Documents cités:
**FR - A - 2 408 676**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Bompard, Bruno, 23, rue de Montbrillant, F-69003 Lyon (FR)**
Inventeur: **Bruyere, Alain, 258, La Duchère, F-69009 Lyon (FR)**

(74) Mandataire: **Mongrédien, André et al, c/o BREVATOME 25, rue de Ponthieu, F-75008 Paris (FR)**

## Description

La présente invention concerne un procédé d'implantation de picots sur un mandrin-support réalisé en un matériau apte à recevoir les picots par implantation directe par pression, pour former des rangées de picots alignées selon des génératrices du mandrin, ainsi qu'une machine pour la mise en œuvre de ce procédé.

Dans la fabrication des corps ou pièces de révolution en matériau tridimensionnel, on a déjà proposé, notamment dans le brevet français FR-A No 2408676 déposé le 23 septembre 1977 au nom du Commissariat à l'Energie Atomique, d'implanter des picots sur un mandrin de façon à définir entre les picots des couloirs longitudinaux et circonférentiels, de disposer dans ces couloirs, par bobinage et par tramage, des nappes de fils superposés, de densifier l'ensemble ainsi obtenu, par exemple au moyen d'une résine thermodurcissable et, enfin, d'éliminer le mandrin-support. Le corps ou la pièce ainsi obtenu comprend trois séries de fils disposées selon trois directions préférentielles, éventuellement perpendiculaires entre elles, la densité des fils dans chacune des trois directions pouvant être aussi élevée que désiré. On peut ainsi obtenir un corps de révolution en un matériau tridimensionnel de forte épaisseur si la longueur des picots est suffisante pour permettre la superposition de nombreuses nappes de fils sur le mandrin par bobinage et par tramage.

Le principe de la mise en place des fils selon une direction sensiblement radiale par implantation de picots sur un mandrin recouvert d'une couche facilement pénétrable et apte à être éliminée après la réalisation des nappes de fils selon deux autres directions est connu du brevet US-A No 3577294. Toutefois, dans ce brevet, il est prévu d'implanter les picots à l'aide d'un pistolet à air ou analogue, ce qui conduit à une implantation particulièrement peu précise. En effet, dès que la densité et surtout la longueur des picots s'accroissent, il devient pratiquement impossible de réaliser les couches de fils selon les deux autres directions par suite de l'entrecroisement des picots. Cela est confirmé par le texte de ce brevet qui indique clairement que les picots doivent être courts et qui compare la structure du mandrin après implantation à du velours.

On a proposé dans le brevet français FR-A No 2408676 déjà cité un procédé et une machine utilisant ce principe. Toutefois, bien que la machine décrite dans ce brevet soit plus précise et permette donc une implantation plus fine des picots dans le mandrin, elle présente malgré tout certaines limitations techniques dues au fait que la distance entre la surface à implanter et les moyens de guidage des picots est entièrement dépendante de la longueur des picots à implanter.

Dans le cas de pièces tridimensionnelles épaisses, il faut, pour parvenir à réaliser dans des conditions normales le bobinage et le tramage, que la qualité de l'implantation du mandrin soit parfaite. Les picots implantés doivent donc être parfaitement alignés selon l'axe ou selon la circonférence. Cette qualité ne peut être obtenue que dans la mesure où les moyens mis en place sont très précis. En effet, si l'on considère une pièce tridimensionnelle dont le pas axial est de 3 mm, la longueur des picots de 200 mm, le diamètre du picot de 1 mm, une légère déviation du picot de 0° 34' lors de son implantation fera qu'à leur sommet les picots se toucheront, rendant dans ce cas le bobinage impossible.

Une analyse critique des procédés précédents et plus particulièrement du brevet FR-A No 2408676 du 23 septembre 1977 met en relief certaines lacunes ou insuffisances techniques. En effet, le picot, lors de son insertion dans la mousse, doit faire sa place. Des manques d'homogénéité dans la mousse (bulles, densité supérieure, particules dures, etc.) ont tendance à faire dévier le picot. Des irrégularités de section et de coupe (picot à section biseautée ou fibreuse) provoquent des mauvais alignements des picots. Enfin, des irrégularités de surface (puce, protubérance) blessent la mousse et surdimensionnent les trous lors de l'insertion. Les picots ont alors tendance à tomber très facilement.

D'autre part, la qualité en rectitude du picot doit être d'autant plus parfaite que la distance entre la surface de la mousse et les organes de guidage est élevée. Les picots, généralement obtenus à partir d'éléments fibreux prépolymérisés, présentent une légère flèche gênante dès que l'on aborde des longueurs de 50 mm et plus. L'implantation avec de tels picots présente au niveau du mannequin fait dans la mousse de fortes irrégularités. Pour pallier ce défaut, il faut guider le picot d'une façon très complète et concevoir des moyens de guidage suffisamment élaborés pour ne pas gêner la suite du cycle de fabrication.

Pour les différentes raisons qui viennent d'être évoquées, il est actuellement pratiquement impossible de fabriquer par les procédés connus des objets de révolution en matériau tridimensionnel présentant une épaisseur supérieure à 50 mm. Toutefois, pour de nombreuses applications, il est souhaitable de pouvoir disposer d'un procédé et d'une machine permettant d'implanter sur un mandrin des picots de grande longueur afin de réaliser ultérieurement des objets de révolution en matériau tridimensionnel présentant une épaisseur nettement supérieure, pouvant atteindre notamment 150 mm.

La présente invention a précisémment pour objet un procédé d'implantation de picots sur un mandrin-support permettant d'implanter des picots de grande longueur (supérieure à 50 mm) avec une précision suffisante pour ne pas empêcher la mise en place ultérieure de couches de fils superposées dans les couloirs définis entre les picots. L'invention a également pour objet une machine pour la mise en œuvre de ce procédé.

A cet effet, et conformément à la présente invention, il est proposé un procédé d'implantation de picots sur un mandrin-support réalisé au moins en partie en un matériau apte à recevoir les picots par implantation directe par pression pour former des rangées de picots alignés selon des génératrices du mandrin, caractérisé en ce qu'il consiste à faire tourner pas à pas le mandrin-suport, à réaliser simultanément, au moyen d'une seule tête de travail, une perforation destinée à recevoir un picot et l'implantation d'un picot dans une perforation réalisée au préalable dans la même rangée et à réaliser un déplacement relatif donné, parallèlement à la génératrice du mandrin la plus proche, entre la tête de travail et le mandrin, au moins une fois à chaque rotation d'un tour complet du mandrin.

On conçoit que la réalisation d'une perforation préalable dans le mandrin permet d'assurer à la fois un maintien et un guidage efficaces du picot lors de son implantation. De plus, le fait que l'implantation des picots et la réalisation des perforations soient effectuées simultanément au moyen d'une seule tête de travail permet d'être sûr que le picot à implanter se trouve parfaitement au droit de la perforation lorsqu'il est enfoncé dans le mandrin sans affecter le cycle de fabrication. L'ensemble de ces caractéristiques conduit à une amélioration très sensible du maintien, du positionnement et du guidage des picots lors de leur implantation. Il en résulte que la qualité de l'implantation est très nettement améliorée par rapport aux procédés de la technique antérieure. Des picots de grande longueur peuvent ainsi être implantés sans difficulté.

Dans un mode de fabrication où l'on cherche à implanter des picots dans un support solide et dur (technique métallique), ce support compact devant résister ultérieurement à de fortes pressions de bobinage ainsi qu'à certains chocs thermiques, il a été étudié et réalisé une implantation en deux phases. Pour cela, on réalise un mandrin de préférence bicouche constitué par un anneau métallique dans lequel on a, par exemple, expansé de la mousse. Avant de procéder à l'implantation, on effectue un prétrou au moins dans la couche métallique. Une fois cette opération effectuée, on réalise simultanément la fin des perforations et l'implantation des picots selon le procédé de l'invention. Un tel mandrin permet par sa couronne métallique de posséder les caractéristiques physiques voulues par les opérations de tissage et de traitement ultérieurs et, par la présence de mousse, d'assurer une bonne tenue des picots lors de leur insertion. A ce mode de réalisation plus long et plus onéreux est toutefois préférée la solution directe de perforation et d'implantation simultanée dans la mousse nue.

Toujours dans le but d'améliorer la qualité de l'implantation des picots, on réalise de préférence les perforations sur une profondeur au moins égale à la longueur de la partie des picots à implanter dans le mandrin, le diamètre des perforations étant sensiblement égal à celui des picots.

L'invention a également pour objet une machine pour l'implantation de picots sur un mandrin-support réalisé en un matériau apte à recevoir les picots par implantation directe par pression, pour former des rangées de picots alignés selon des génératrices du mandrin, cette machine comprenant des moyens pour supporter le mandrin de façon tournante, des moyens pour faire tourner le mandrin pas à pas autour de son axe, une tête de travail portant des moyens pour implanter les picots dans le mandrin et des moyens pour effectuer un déplacement relatif donné, parallèlement à la génératrice du mandrin la plus proche, entre la tête de travail et le mandrin, et étant caractérisée en ce que la tête de travail porte de plus un poinçon disposé dans la même rangée que le picot à implanter et décalé d'au moins une fois le pas défini par deux picots successifs d'une même rangée et vers l'avant par rapport à ce picot, dans le sens du déplacement de la tête de travail, les moyens pour implanter les picots agissant simultanément sur le poinçon pour réaliser une perforation préalable du mandrin.

Dans un mode de réalisation préféré de l'invention, la tête de guidage comprend une pièce de guidage venant affleurer la surface externe du mandrin et comportant un premier trou de guidage dans lequel est reçu le poinçon et un deuxième trou de guidage dans lequel est reçu le picot à implanter, la paroi du deusième trou de guidage étant formée sur une porte mobile à l'arrière de la tête de guidage dans le sens de rotation du mandrin, des moyens de commande appropriée ouvrant ladite porte après l'implantation d'un picot, pour permettre la rotation de ce dernier avec le mandrin, et fermant ladite porte après cette rotation.

Selon une autre caractéristique de l'invention, les moyens pour implanter les picots comprennent une première pièce mobile selon une direction parallèle aux trous de guidage formés dans la pièce de guidage et placée au-dessus de cette dernière, la première pièce venant en appui au cours de son déplacement sur une deuxième pièce supportant le poinçon, et portant une tige d'implantation venant en appui sur le picot à implanter. Un barillet porte-picots, muni de logements régulièrement espacés aptes à recevoir les picots, peut alors être placé entre la première pièce mobile et la pièce de guidage, ce barillet étant alimenté en picots par un tube d'alimentation vertical solidaire de la première pièce et des moyens étant prévus pour faire tourner le barillet d'un angle donné correspondant à l'espace séparant deux logements à chaque fois qu'un picot a été implanté dans le mandrin.

On décrira maintenant, à titre d'exemple non limitatif, un mode de réalisation particulier de l'invention en se référant aux dessins annexés dans lesquels:

la fig. 1 est une vue schématique, en perspective, de la machine permettant d'implanter les picots sur un mandrin conformément à la présente invention,

la fig. 2 est une vue en coupe, selon un plan contenant l'axe du mandrin, de la tête de travail de la machine de la fig. 1,

les fig. 3a et 3b sont des vues en coupe comparables à la fig. 2 représentant la tête de travail dans deux positions particulières de mise en œuvre de la machine selon l'invention,

la fig. 4 est une vue en perspective montrant l'extrémité inférieure de la tête de travail de la machine selon l'invention,

la fig. 5 est une vue de dessus, en coupe selon la ligne V-V de la fig. 2, montrant le fonctionnement de la porte servant au guidage des picots lorsqu'ils sont implantés dans le mandrin,

la fig. 6 est une vue comparable à la fig. 5 montrant à plus grande échelle le guidage du pointeau réalisant les perforations préalables sur le mandrin et le guidage des picots lors de leur implantation.

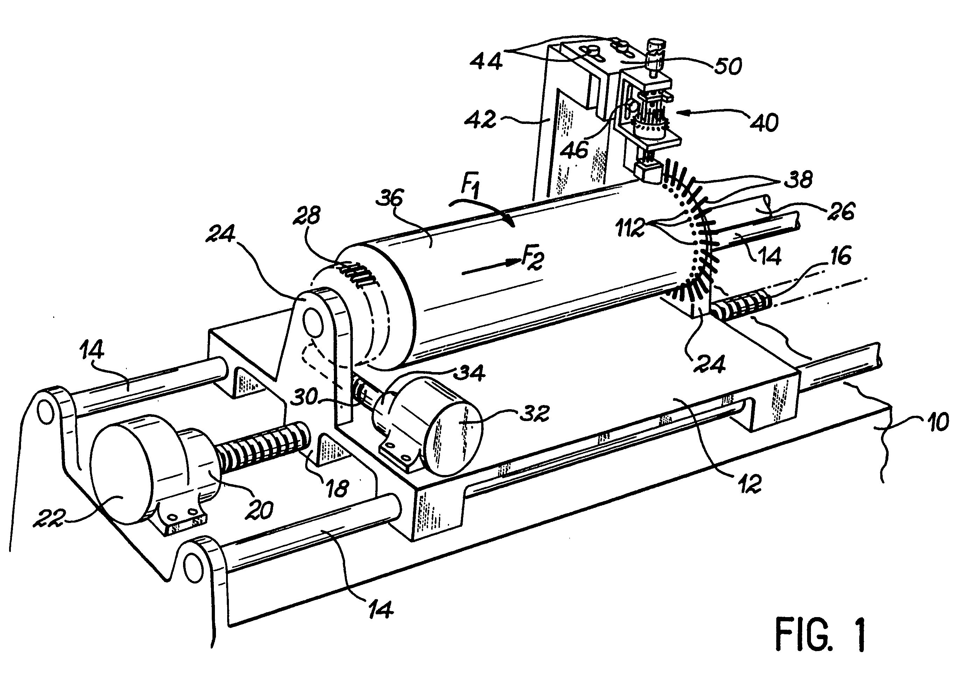

Comme le montre la fig. 1, la machine selon l'invention comporte une table 10, sensiblement horizontale, au-dessus de laquelle est susceptible de se déplacer une platine 12, également horizontale. Plus précisément, la platine 12 est guidée par deux colonnettes parallèles 14 portées par la table 10. En outre, la platine 12 peut se déplacer le long de ces colonnettes par suite de la coopération d'une vis sans fin 16, également horizontale et parallèle aux colonnettes 14, avec un taraudage approprié formé dans une noix 18 solidaire de la platine 12. La vis sans fin 16 est entraînée en rotation à travers un réducteur 20 par un moteur pas à pas 22 fixé sur la table 10. La platine 12 porte à chacune de ses extrémités un bras 24 qui fait saillie vers le haut et supporte en rotation un arbre horizontal 26 dont l'axe est également parallèle à ceux des colonnettes 14 et de la vis sans fin 16. L'arbre 26 est solidaire d'un pignon 28 qui s'engrène sur une vis sans fin 30 dont la rotation est commandée par un moteur pas à pas 32 au travers d'un réducteur 34. Le moteur 32 est fixé à la platine 12.

L'arbre 26 supporte également, entre les bras 24, un mandrin-support 36 sur lequel, conformément à l'invention, il convient d'implanter des picots rigides. Comme on l'a indiqué précédemment, la forme extérieure du mandrin 36 définit l'enveloppe intérieure du corps de révolution à réaliser. Ainsi, par exemple, sur la fig. 1, ce mandrin est cylindrique et permet donc de fabriquer un corps de révolution présentant un évidement cylindrique.

De façon connue, le mandrin 36 est réalisé au moyen d'un matériau suffisamment rigide pour pouvoir assurer le support des picots et suffisamment souple pour autoriser l'implantation de ces derniers sans nécessiter un effort trop important. Toutefois, conformément à la présente invention, la réalisation de perforation préalable dans le mandrin permet d'utiliser un matériau moins souple que dans la technique antérieure, ce qui participe à l'amélioration de la tenue des picots comme on le verra par la suite. De préférence, le mandrin est réalisé au moyen d'une mousse rigide du genre de celles connues dans la technique sous les termes de mousse phénolique ou de mousse de polyuréthane. Comme on l'a déjà mentionné, le mandrin peut être réalisé en mousse dans sa totalité ou être constitué par une couche externe en un matériau dur, notamment métallique, qu'on remplit de mousse. Dans ce dernier cas, qui permet de conférer au mandrin une bonne résistance mécanique, il est nécessaire de réaliser des perforations préalables traversant au moins la couche externe.

Grâce à la combinaison des mouvements obtenus à l'aide des moteurs 22 et 32, qui assurent respectivement un déplacement du mandrin 36 parallèlement à son axe et une rotation du mandrin sur lui-même, on voit qu'il est possible de faire défiler sous un point fixe quelconque dans l'espace toute la surface du mandrin et de réaliser ainsi, en commandant ces deux mouvements pas à pas, l'implantation sur le mandrin d'une série de picots 38 soit en hélice si chaque mise en œuvre du moteur 32 s'accompagne d'une mise en œuvre du moteur 22, soit sous forme de cercles régulièrement espacés si la mise en œuvre du moteur 22 n'intervient qu'une fois au cours d'une rotation d'un tour du mandrin 36. Dans les deux cas, le pas des picots ainsi implantés peut être réglé à volonté en agissant sur les moteurs 22 et 32.

L'implantation des picots et, conformément à l'invention, la réalisation de perforations préalables 112 s'effectuent au moyen d'une tête de travail 40 montée sur la branche verticale d'une équerre 50 par l'intermédiaire de vis de réglage 46. La branche horizontale de l'équerre 50 est elle-même montée sur un support vertical 42 par l'intermédiaire de vis de réglage 44. Le support 42 est solidaire de la table 10. La tête de travail 40 peut ainsi être positionnée à la verticale au-dessus du mandrin 36 comme l'illustre la fig. 1 en agissant sur les vis 44 et 46.

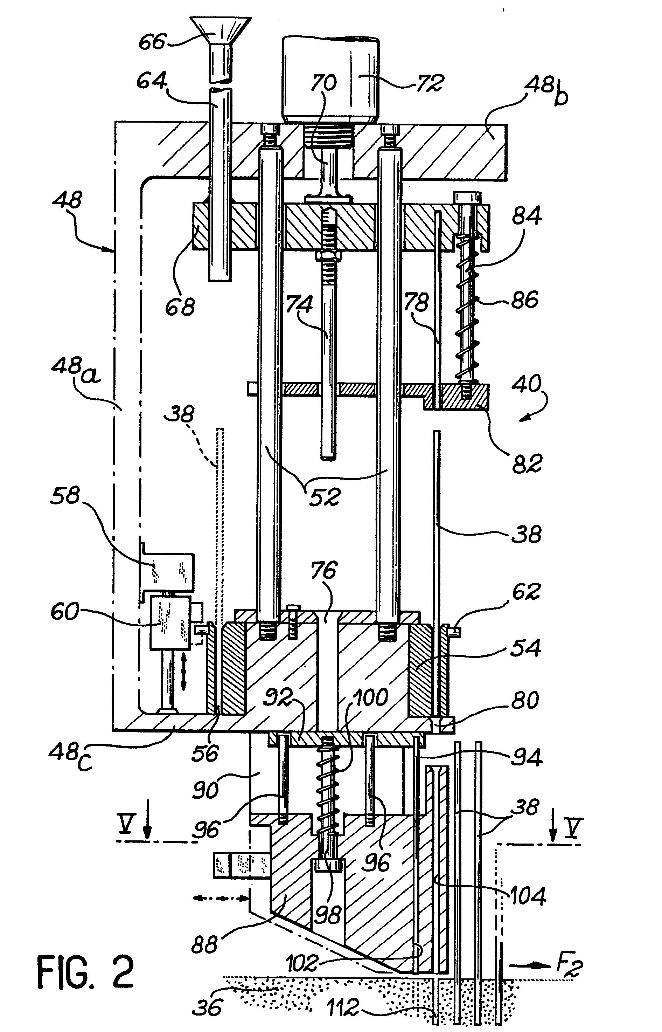

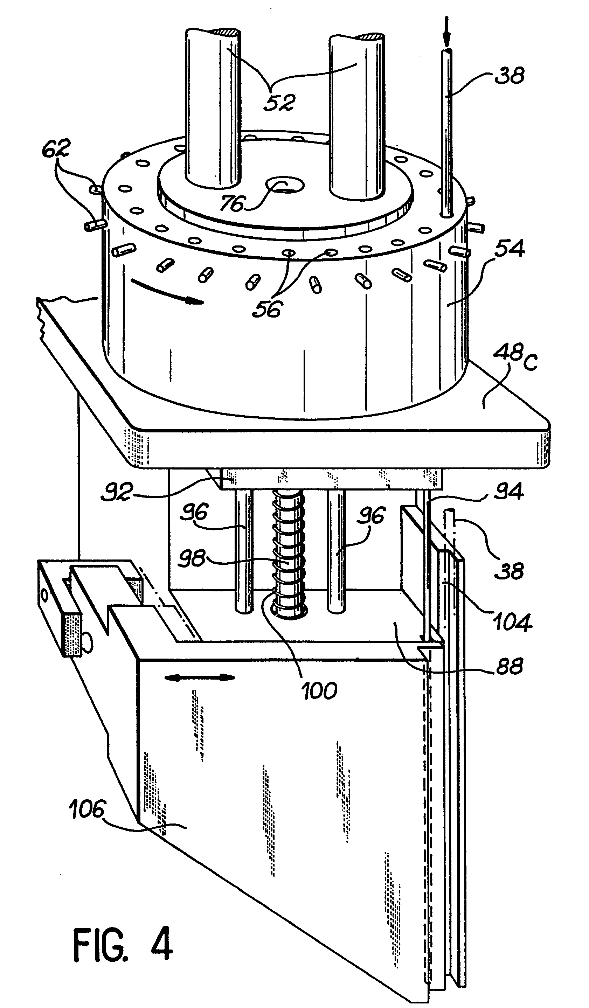

On décrira maintenant plus en détail la tête de travail 40 en se référant à la fig. 2. Comme l'illustre cette figure, la tête de travail 40 comprend une pièce-support en U 48 dont la branche intermédiaire 48a est verticale et fixée par les vis 46 à l'équerre 50 et dont les branches d'extrémité horizontales supérieure 48b et inférieure 48c supportent entre elles des colonnes de guidage verticales 52. La branche inférieure 48c forme à sa partie supérieure un arbre vertical autour duquel est reçu un barillet tournant 54 équipé comme l'illustre en particulier la fig. 4 d'un certain nombre de trous ou logements verticaux 56, répartis régulièrement sur sa circonférence. La rotation pas à pas du barillet 54 est commandée par un vérin 58 fixé au support 48 et déplaçant alternativement de haut en bas et de bas en haut une pièce 60 munie de surfaces de came appropriées qui coopèrent avec des tiges radiales 62 portées par le barillet 54, de façon à faire tourner ce dernier d'une valeur correspondante au pas séparant deux trous 56 adjacents lors de la mise en œuvre du moteur 58. Les trous 56 reçoivent les picots 38 par un tube vertical d'alimentation 64 qui se termine à son extrémité supérieure par un entonnoir 66 dans lequel les picots sont introduits par tout moyen connu.

Le tube d'alimentation 64 est fixé à une pièce constituée par une plaque horizontale 68 apte à se déplacer le long des colonnes 52. Plus précisément, la plaque 68 est fixée à l'extrémité inférieure de la tige 70 d'un vérin pneumatique 72 supporté par la branche supérieure 48b de la pièce 48. Dans le prolongement de la tige 70, la plaque 68 porte un doigt vertical 74 qui fait saillie vers le bas sur une longueur suffisante pour traverser un trou 76

formé dans la branche inférieure 48c lorsque la plaque 68 est en position basse, comme on le verra par la suite. La plaque 68 porte également un poinçon vertical d'implantation ou tige 78, qui fait également saillie vers le bas et qui est disposé en face de l'un des picots 38 porté par le barillet 54. Plus précisémment, la tige 78 est disposée en face d'un picot 38 qui est lui-même disposé en face d'un trou 80 dans la branche inférieure 48c de la pièce 48. Le guidage de la tige 78, dont le diamètre est pratiquement égal à celui des picots, est réalisé au moyen d'une plaque horizontale intermédiaire 82 fixée sur une vis verticale 84 traversant la plaque 68 et sollicitée vers la bas en éloignement de cette dernière par un ressort 86.

En dessous de la branche inférieure 48c est fixée une pièce de guidage 88 qui vient de préférence affleurer la surface externe du mandrin 36, comme le montre la fig. 2. La pièce 88 présente en dessous de la branche inférieure 48c un évidement 90 dans lequel est reçue une pièce mobile constituée par une plaque horizontale 92 supportant un poinçon 94. Le guidage de la plaque 92 est réalisé au moyen de colonnes verticales 96 fixées entre la pièce 88 et la branche 48c. De plus, une vis 98 fait saillie vers le bas à partir de la plaque 92 au travers de la pièce 88. Un ressort 100 monté sur la vis 98 entre la pièce 88 et la plaque 92 sollicite cette dernière vers le haut dans la position représentée sur la fig. 2.

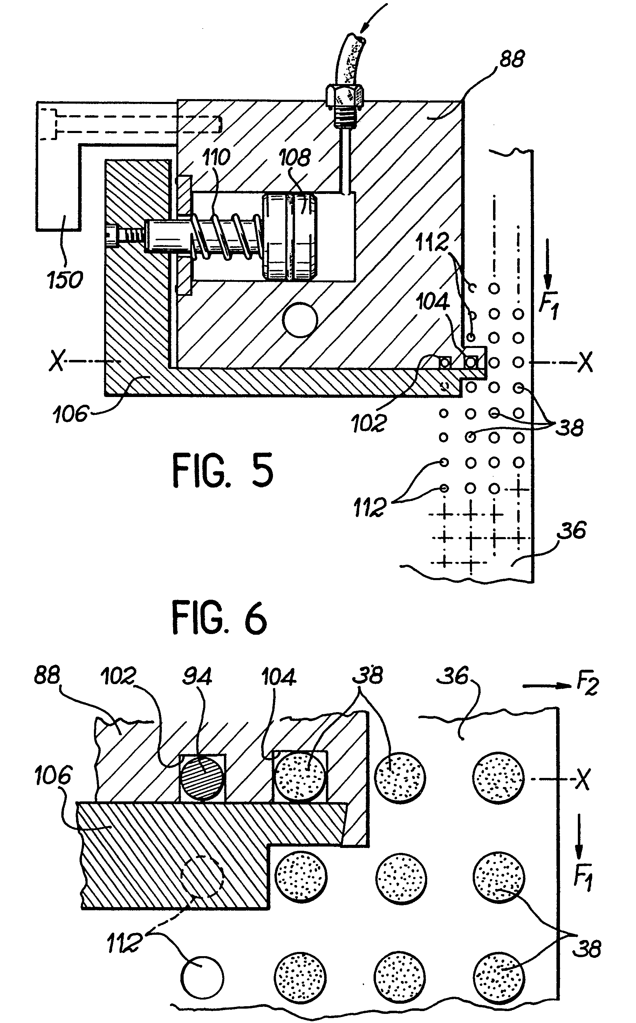

Le poinçon 94 est fixé à la plaque 92 et traverse un premier trou de guidage vertical 102 formé dans la pièce de guidage 88. Plus précisément, lorsque la plaque 92 est en position haute, l'extrémité du poinçon 94 affleure l'extrémité inférieure de la pièce 88. Cette dernière présente également un deuxième trou de guidage vertical 104 aligné avec le trou 80 d'alimentation en picots 38, de façon à assurer un guidage efficace de ces derniers lors de leur implantation. Comme le fait apparaître notamment la fig. 5, la tête de travail 40 est disposée de telle sorte que les axes des trous de guidage 102 et 104 sont placés dans le plan vertical passant par l'axe X-X du mandrin 36. De plus, les axes des trous 102 et 104 sont décalés l'un par rapport à l'autre d'une distance correspondant à un nombre entier de fois la distance ou le pas séparant deux picots successifs d'une même rangée longitudinale sur le mandrin, le trou de guidage 102 du poinçon 94 étant placé en avant par rapport au trou de guidage 104 des picots par rapport au sens de l'implantation de ces derniers. Dans le mode de réalisation représenté, cette distance est égale à une fois le pas défini par les picots 38 d'une même rangée longitudinale.

Afin de permettre au mandrin 36 de tourner après l'implantation d'un picot, le guidage du picot qui vient d'être implanté selon le guide 104 doit être interrompu momentanément lorsqu'intervient la rotation du mandrin. A cet effet, on voit sur les fig. 4 à 6 que le trou de guidage 104 des picots à implanter est formé au niveau de l'extrémité arrière de la pièce de guidage 88 par rapport au sens de rotation du mandrin schématisé par la flèche $F_1$ sur les figures. De plus, le bord arrière du trou 104 est formé sur une porte coulissante 106 qui s'ouvre juste avant la rotation du mandrin dans le sens de la flèche $F_1$. Comme le montre en particulier la fig. 5, la porte 106 se déplace parallèlement à l'axe du mandrin sous l'action d'un vérin pneumatique 108 porté par la pièce de guidage 88, un ressort 110 agissant normalement entre la pièce 88 et la porte 106 pour maintenir cette dernière en position fermée. La course de la porte 106 est limitée par une butée 150 fixée sur la pièce 88.

On décrira maintenant le fonctionnement de la machine qui vient d'être décrite en se référant à l'ensemble des figures.

Comme on l'a déjà mentionné précédemment, toute la surface du mandrin 36 défile sous la tête de travail 40 par les déplacements pas à pas conjugués en rotation et en translation qui sont transmis au mandrin par les moteurs 32 et 22. Entre chacun de ces déplacements, la tête de travail 40 est mise en œuvre pour réaliser simultanément deux opérations conformément à la présente invention. La première de ces opérations consiste en une perforation préalable du mandrin au moyen du poinçon 94, alors que la seconde opération consiste à implanter un picot 38 dans la perforation réalisée au tour précédent par le poinçon lorsque la distance séparant les trous 102 et 104 est égale à la distance séparant deux picots consécutifs d'une même rangée.

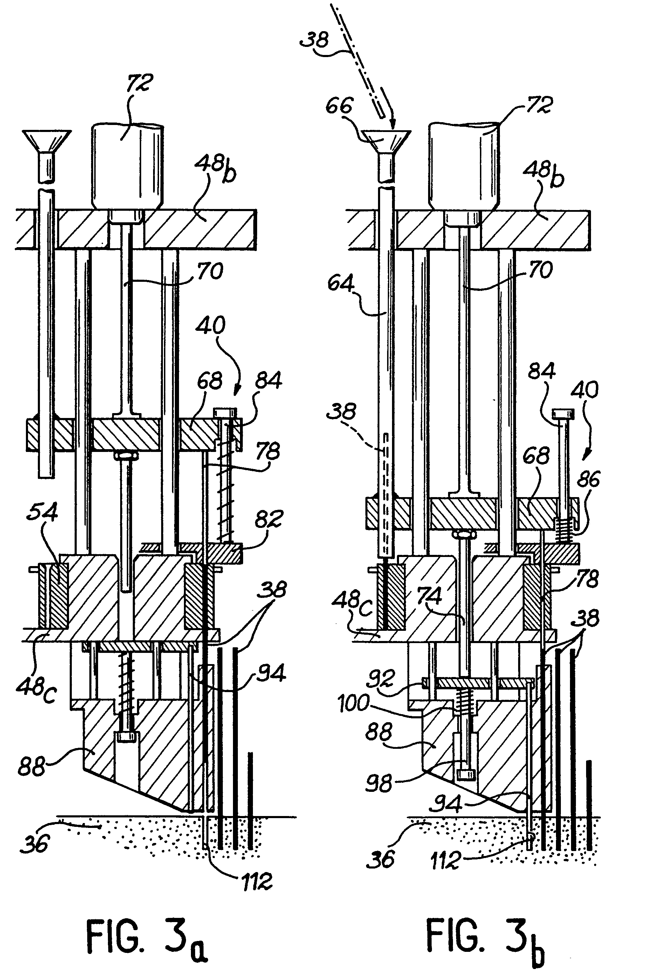

Plus précisément, la mise en œuvre de la tête de travail 40 se traduit d'abord par la descente de la plaque 68 sous l'action du vérin 72. Dans un premier temps et comme l'illustre la fig. 3a, cette descente permet à la tige 78 portée par la plaque 68 d'enfoncer le picot 38 en vis-à-vis dans le trou 80 formé dans la branche 48c, puis dans le trou de guidage 104 de la pièce 88. Pendant cette première phase du mouvement, le guidage de l'extrémité de la tige 78 agissant sur le picot est réalisé au moyen de la plaque 82. Lorsque cette dernière vient en butée contre le barillet 54, ce dernier assure lui-même le guidage de la tige 78 et le ressort 86 se comprime comme l'illustre la fig. 3b. Lorsque ce ressort est complètement comprimé, le picot correspondant est enfoncé dans la perforation 112 en vis-à-vis réalisée précédemment dans le mandrin. Il est à noter que, pendant cette implantation, le picot est parfaitement guidé et positionné par le trou 104 formé dans la pièce de guidage 88.

Au cours de la seconde phase du mouvement de descente de la plaque 68 qui vient d'être décrite en se référant à la fig. 3b, la tige 74 traverse le trou 76 et vient en appui par son extrémité inférieure contre la plaque 92. Elle sollicite ainsi cette dernière vers le bas à l'encontre du ressort 100. Ce déplacement de la plaque 92 a pour effet de faire saillir le poinçon 94 de la pièce 88 et de l'enfoncer dans le mandrin 36. Une perforation 112 est ainsi réalisée dans le mandrin. De préférence, le diamètre de cette perforation est sensiblement égal au diamètre du picot à implanter et sa profondeur est légèrement supérieure à la longueur de la partie des picots qui doit être implantée dans le mandrin. Conformément à l'invention, cette perforation préalable permet d'assurer ultérieurement un positionnement et un guidage très précis des picots 38. De plus, la réalisation simultanée des perforations préalables 112 et de l'implantation proprement dite des picots 38 dans ces perforations au moyen d'une tête de travail unique 40 permet de réaliser les perforations préalables exactement à l'endroit où les picots doivent être implantés ultérieurement. Il est ainsi possible d'implanter des picots de grande longueur sans que les opérations ultérieures de bobinage et de tramage du mandrin soient rendues irréalisables.

Enfin, simultanément aux deux opérations qui viennent d'être décrites, l'arrivée en position basse de la plaque 68 représentée sur la fig. 3b permet également d'assurer l'alimentation du barillet 54 en picots.

En effet, la descente de la plaque 68 amène l'extrémité inférieure du tube 64 à proximité du barillet, ce qui permet d'introduire facilement un picot 38 dans le trou 66 correspondant en faisant chuter à ce moment un picot par le tube 64 comme l'illustre schématiquement la fig. 3b. La temporisation de l'alimentation en picots peut être obtenue par tout moyen connu commandé par un automatisme.

Lorsque ces trois opérations sont effectuées, le vérin 72 remonte l'ensemble des organes de la tête de travail 40 jusqu'à la position d'attente représentée sur le fig. 2. La rotation du mandrin 36 dans le sens de la flèche $F_1$ sous l'action du moteur 32 et, si nécessaire, son avance dans le sens de la flèche $F_2$ (fig. 1, 2, 5 et 6) sous l'action du moteur 22 peuvent alors être commandées pour amener la tête de travail 40 au niveau de sa position de travail suivante. Toutefois, ces mouvements doivent être précédés par une ouverture de la porte 106 sous l'action du vérin 108 afin que le picot 38 qui vient d'être implanté puisse être dégagé du trou de guidage 104.

Afin que la tige 78 trouve au cours de sa descente suivante un picot 38 à enfoncer par le trou de guidage 104, les mises en œuvre des moteurs 22 et 32 s'accompagnent d'une mise en œuvre du vérin 58 permettant par l'intermédiaire du système 60 et des doigts 62 de commander la rotation du barillet 54 pour amener un picot 38 en vis-à-vis de la tige 78 et un trou vide 56 en vis-à-vis du tube 64.

Bien entendu, l'invention n'est pas limitée au mode de réalisation qui vient d'être décrit à titre d'exemple, mais en couvre toute les variantes. Ainsi, on a vu que l'implantation des picots peut se faire de préférence soit selon une hélice, soit selon des cercles équidistants. De même, les moyens permettant d'actionner le poinçon et d'enfoncer le picot peuvent être différents des moyens décrits, sans sortir du cadre de l'invention. En outre, le mandrin n'est pas nécessairement cylindrique, mais peut présenter n'importe quelle forme de révolution. Dans ce cas, le déplacement du mandrin parallèlement à son axe sous l'action du moteur 22 peut être accompagné par un déplacement de la tête de travail perpendiculairement à la génératrice du mandrin la plus proche. Le mandrin peut en outre présenter une couche externe dure, préalablement perforée.

Compte tenu des moyens mis en place et de la souplesse de fonctionnement des commandes électroniques, il est possible de modifier l'orientation des génératrices préférentielles axiales et circonférentielles en jouant sur le nombre de pas effectués par les moteurs pas à pas.

Ces techniques définies sont compatibles avec des procédés de préperforation de mandrin bicouche et d'implantation différée.

Il suffit pour cela de disposer d'une tête de perçage classique en mécanique et de remplacer ce moyen par la tête d'implantation décrite précédemment.

Enfin, dans le cadre de pièce simple ou dans le cadre de fabrication de grande série, il est facilement envisageable de concevoir une optimisation de cette tête capable de préperforer plusieurs trous simultanément et d'implanter plusieurs picots à la fois.

## Revendications

1. Procédé d'implantation de picots (38) sur un mandrin-support (36) réalisé au moins en partie en un matériau apte à recevoir les picots par implantation pour former des rangées de picots alignés selon des génératrices du mandrin, caractérisé en ce qu'il consiste à faire tourner pas à pas le mandrin-support, à réaliser simultanément, au moyen d'une seule tête de travail, une perforation (112) destinée à recevoir au moins un picot et l'implantation d'un picot (38) dans une perforation réalisée au préalable dans la même rangée, et à réaliser un déplacement relatif donné, parallèlement à la génératrice du mandrin la plus proche, entre la tête de travail et le mandrin, au moins une fois à chaque rotation d'un tour complet du mandrin.

2. Procédé selon la revendication 1, caractérisé en ce qu'on utilise un mandrin comprenant une couche externe en matériau dur, remplie par ledit matériau apte à recevoir les picots, et en ce qu'on perfore ce mandrin au préalable au moins au niveau de ladite couche externe.

3. Procédé selon l'une des revendications 1 ou 2, caractérisé en ce qu'on réalise les perforations (112) sur une profondeur au moins égale à la longueur de la partie des picots (38) à implanter dans le mandrin (36).

4. Procédé selon l'une des revendications 1 à 3, caractérisé en ce qu'on réalise les perforations (112) avec un diamètre sensiblement égal à celui des picots (38).

5. Machine pour l'implantation de picots (38) sur un mandrin-support (36) réalisé au moins en partie en un matériau apte à recevoir les picots par implantation directe pour former des rangées de picots alignés de préférence selon des génératrices du mandrin, comprenant des moyens (26) pour supporter le mandrin de façon tournante, des moyens (28, 30, 32) pour faire tourner le mandrin pas à pas autour de son axe, une tête de travail (40) portant des moyens (68, 72, 78) pour implanter de préférence un à un les picots dans le mandrin, et des moyens (16, 18, 22) pour effectuer un déplacement relatif donné, parallèlement à la génératrice du mandrin la plus proche, entre la tête de travail et le mandrin, caractérisée en ce que la tête de travail (40) porte au moins un poinçon (94) disposé dans la même rangée que le picot (38) à implanter et décalé d'au moins une fois le pas défini par deux picots successifs d'une même ramgée et vers l'avant par rapport à ce picot, dans le sens du déplacement de la tête de travail, les moyens (68, 72, 78) pour implanter les picots (38) agissant de préférence simultanément sur le poinçon (94) pour réaliser une perforation (112) préalable du mandrin (36).

6. Machine selon la revendication 5, caractérisée en ce que la tête de travail (40) comprend une pièce de guidage (88) venant affleurer la surface externe du mandrin (36) et définissant un premier trou de guidage (102) dans lequel est reçu le poinçon (94) et un deuxième trou de guidage (104) dans lequel est reçu le picot (38) à implanter, la paroi du deuxième trou de guidage (104) étant formée sur une porte mobile (106) à l'arrière de la tête de guidage (40) dans le sens de rotation du mandrin, des moyens de commande appropriées (108) ouvrant ladite porte après l'implantation d'un picot, pour permettre la rotation de ce dernier avec le mandrin et fermant ladite porte après cette rotation.

7. Machine selon la revendication 6, caractérisée en ce que les moyens pour implanter les picots comprennent une première pièce mobile (68) selon une direction parallèle aux trous de guidage (102, 104) formés dans la pièce de guidage (88), la première pièce étant placée au-dessus de cette dernière, venant en appui au cours de son déplacement sur une deuxième pièce (92) portant le poinçon (94) et portant une tige d'implantation (78) venant en appui sur le picot (38) à implanter.

8. Machine selon la revendication 7, caractérisée en ce qu'un barillet porte-picots (54), muni de logements (56) régulièrement espacés aptes à recevoir les picots (38), est placé entre la première pièce mobile (68) et la pièce de guidage (88), ce barillet étant alimenté en picots par un tube d'alimentation vertical (64) solidaire de la première pièce, des moyens (58, 60) étant prévus pour faire tourner le barillet d'un angle donné correspondant à l'espace séparant deux logements (56) à chaque fois qu'un picot (38) a été implanté dans le mandrin (36).

## Patentansprüche

1. Verfahren zum Einstossen von Nadeln (38) in einen Trägerzylinder (36), der wenigstens teilweise aus einem Material hergestellt ist, welches die Nadeln durch Einstossen aufnehmen kann, um Reihen von längs der Erzeugenden der Walze ausgerichteten Nadeln zu bilden, dadurch gekennzeichnet, dass die Trägerwalze schrittweise gedreht und gleichzeitig mittels eines einzigen Arbeitskopfes ein Loch (112), welches zur Aufnahme von wenigstens einer Nadel bestimmt ist, erzeugt und das Einstossen einer Nadel (38) in ein Loch durchgeführt wird, welches vorhergehend in der gleichen Reihe erzeugt worden ist, und dass zwischen dem Arbeitskopf und der Walze eine vorgegebene, relative Verschiebung parallel zu der am nächsten gelegenen Erzeugenden der Walze wenigstens einmal bei jeder vollständigen Umdrehung der Walze durchgeführt wird.

2. Verfahren nach Anspruch 1, dadurch gekennzeichnet, dass eine Walze verwendet wird, die eine äussere Schicht aus einem harten Material aufweist, welche mit dem zur Aufnahme der Nadeln geeigneten Material gefüllt ist, und dass diese Walze vorher mindestens auf der Höhe der äusseren Schicht durchbohrt wird.

3. Verfahren nach einem der Ansprüche 1 oder 2, dadurch gekennzeichnet, dass die Löcher (112) mit einer Tiefe erzeugt werden, die wenigstens gleich der Länge des Abschnittes der in die Walze (36) einzustossenden Nadeln (38) ist.

4. Verfahren nach einem der Ansprüche 1 bis 3, dadurch gekennzeichnet, dass die Löcher (112) mit einem Durchmesser erzeugt werden, der im wesentlichen gleich demjenigen der Nadeln (38) ist.

5. Vorrichtung zum Einstossen von Nadeln (38) in eine Trägerwalze (36), die zumindest teilweise aus einem Material besteht, welches die Nadeln durch unmittelbares Einstossen aufnehmen kann, um Reihen von Nadeln zu bilden, die vorzugsweise längs der Erzeugenden der Walze ausgerichtet sind, mit Mitteln (26) zum drehbaren Halten der Walze, Mitteln (28, 30, 32) zum schrittweisen drehen der Walze um ihre Achse, einem Arbeitskopf (40), der Mittel (68, 72, 78) trägt, um vorzugsweise die Nadeln einzeln in die Walze einzustossen, und Mitteln (16, 18, 22), um eine vorgegebene, relative Verschiebung parallel zu der am nächsten liegenden Erzeugenden der Walze zwischen dem Arbeitskopf und der Walze durchzuführen, dadurch gekennzeichnet, dass der Arbeitskopf (40) wenigstens einen Dorn (94) trägt, der in der gleichen Reihe wie die einzustossenden Nadeln (38) und um wenigstens einmal die Schrittweite, die durch zwei aufeinanderfolgende Nadeln in der selben Reihe festgelegt ist, und in Vorwärtsrichtung in Bezug auf diese Nadel in der Verschiebungsrichtung des Arbeitskopfes versetzt ist, und dass die Mittel (68, 72, 78) zum Einstossen der Nadeln (38) vorzugsweise gleichzeitig auf den Dorn (94) wirken, um eine vorausgehende Lochung (112) der Walze (36) durchzuführen.

6. Vorrichtung nach Anspruch 5, dadurch gekennzeichnet, dass der Arbeitskopf (40) ein Führungsteil (88) umfasst, welches sich auf der gleichen Höhe wie die Aussenfläche der Walze (36) befindet und ein erstes Führungsloch (102), welches den Dorn (94) aufnimmt, und ein zweites Führungsloch (104) festlegt, welches die einzustossende Nadel (38) aufnimmt, dass die Wandung des zweiten Führungsloches (104) von einem bewegbaren Tor (106) gebildet ist, welches sich im Drehsinn der Walze hinter dem Führungskopf befindet, und dass durch geeignete Steuermittel (108) das Tor nach dem Einstossen einer Nadel zu öffnen ist, um deren Drehung mit der Walze zu erlauben, und durch die das Tor nach dieser Drehung schliessbar ist.

7. Vorrichtung nach Anspruch 6, dadurch gekennzeichnet, dass die Mittel zum Einstossen der Nadeln ein erstes Teil (68) umfassen, welches in einer zu den in dem Führungsteil (88) ausgebildeten Führungslöchern (102, 104) parallelen Richtung bewegbar ist, und dass das erste Teil oberhalb des Führungsteils angeordnet ist und im Laufe seiner Verschiebung gegen ein zweites Teil (92) drückt, welches den Dorn (94) und eine Einstossstange (78) trägt, die auf die einzustossende Nadel (38) stösst.

8. Vorrichtung nach Anspruch 7, dadurch gekennzeichnet, dass zwischen dem ersten, bewegbaren Teil (68) und dem Führungsteil (88) ein Nadeltragzylinder (94) angeordnet ist, der zur Aufnahme der Nadeln (38) mit gleichmässig beabstandeten Kammern (56) versehen ist, und dass dem Zylinder Nadeln durch ein senkrechtes Zuführungsrohr (64) zugeführt werden, welches fest mit dem ersten Teil verbunden ist, und dass Mittel (68, 60) vorgesehen sind, um den Zylinder um einen vorgegebenen, dem zwei Kammern (56) trennenden Raum entsprechenden Winkel jedesmal dann zu drehen, wenn eine Nadel (38) in die Walze (36) eingestossen worden ist.

## Claims

1. Method of implanting pins (38) into a support cylinder (36) made at least partly from a material capable of receiving the pins by implantation in order to form aligned rows of pins according to the generatrices of the cylinder, characterised in that it consists of causing the support cylinder to turn step by step, simultaneously making, by means of a single working head, a perforation (112) intended to receive at least one pin and the implantation of a pin (38) into a perforation made beforehand in the same row, and of performing a given relative displacement parallel with the most closely situated generatrix of the cylinder, between the working head and the cylinder, at least once upon each complete rotation of the cylinder.

2. Method according to Claim 1, characterised in that a cylinder is used which comprises an external layer of hard material filled by the said material which is capable of receiving the pins, and in that this cylinder is perforated beforehand at least at the level of the said external layer.

3. Method according to either of Claims 1 or 2, characterised in that the perforations (112) are made over a depth at least equal to the length of that part of the pins (38) which is to be implanted into the cylinder (36).

4. Method according to any one of Claims 1 to 3, characterised in that the perforations (112) are made with a diameter substantially equal to that of the pins (38).

5. Machine for implanting pins (38) into a support cylinder (36) made at least partly from a material adapted to receive the pins by direct implantation to form aligned rows of pins preferably according to the generatrices of the cylinder, comprising means (26) for supporting the cylinder in a rotary fashion, means (28, 30, 32) for causing the cylinder to rotate step by step about its axis, a working head (40) carrying means (68, 72, 78) for implanting the pins into the cylinder preferably one by one, and means (16, 18, 22) of effecting a given relative displacement parallel with the most closely situated generatrix of the cylinder, between the working head and the cylinder, characterised in that the working head (40) carries at least one punch (94) disposed in the same row as the pin (38) which is to be implanted and offset by an amount at least equal to the pitch defined by two successive pins in one and the same row and forwardly in relation to this pin in the direction of travel of the working head, the means (68, 72, 78) of implanting the pins (38) preferably acting simultaneously on the punch (94) in order to produce a prior perforation (112) in the cylinder (36).

6. A machine according to Claim 5, characterised in that the working head (40) comprises a guide member (88) flush with the outer surface of the cylinder (36) and defining a first guide hole (102) in which the punch (94) is received and a second guide hole (104) in which the pin (38) which is to be implanted is received, the wall of the second guide hole (104) being formed on a movable door (106) at the rear of the guide head (40) in the direction of rotation of the cylinder, suitable operating means (108) opening the said door after the implanting of a pin to allow rotation of this latter with the cylinder and closing the said door after the said rotation.

7. A machine according to Claim 6, characterised in that the means of implanting the pins comprise a first movable member (68) adapted for movement in a direction parallel with the guide holes (102, 104) formed in the guide member (88), the first member being placed above this latter, bearing during the course of its displacement on a second member (92) carrying the punch (94) and carrying an implantation rod (78) which bears on the pin (38) which is to be implanted.

8. A machine according to Claim 7, characterised in that a pin-carrying drum (54) provided with regular spaced housings (56) adapted to receive the pins (38) is placed between the first movable member (68) and the guide member (88), the said drum being supplied with pins through a vertical supply tube (64) rigid with the first member, means (58, 60) being provided to cause the drum to turn through a given angle corresponding to the space separating two housings (56) every time a pin (38) has been implanted into the cylinder (36).

FIG. 1

FIG. 2

FIG. 3ₐ

FIG. 3ᵦ

FIG. 4

0 070 759

FIG. 5

FIG. 6